# EUROPÄISCHE PATENTSCHRIFT

(11) **EP 2 269 768 B1**
(45) Veröffentlichungstag und Bekanntmachung des Hinweises auf die Patenterteilung: **26.12.2012**
(21) Anmeldenummer: 10004756.2
(22) Anmeldetag: 05.05.2010
(51) Int. Cl.: B23Q 1/28, B23Q 1/70, B23Q 5/04

(54) **Werkzeugspindel für eine kombinierte Fräs-/Drehmaschine mit stehendem oder sich drehendem Werkzeug**
Tool spindle for a combined milling/turning machine with fixed or rotating tool
Broche d'outils pour une machine combinée de fraisage/tournage dotée d'un outil fixe ou rotatif

(30) Priorität: 29.06.2009 DE 102009031027
(43) Veröffentlichungstag der Anmeldung: 05.01.2011
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, Dipl-Ing. (FH), 78598 Königsheim (DE)
(74) Vertreter: Hager, Thomas Johannes

(56) Entgegenhaltungen:
- EP-A1- 0 887 134
- EP-A1- 1 902 800
- EP-A2- 0 288 660
- EP-A2- 1 138 435
- DE-A1- 10 027 750
- DE-A1- 19 852 049
- DE-C1- 4 042 406
- JP-A- 60 228 044
- US-A- 3 700 345

## Beschreibung

Die Erfindung betrifft eine geteilte Werkzeugspindel für insbesondere eine kombinierte Fräs-/Drehmaschine, mit stehendem und sich drehendem Werkzeug.

Moderne Bearbeitungszentren für die spanende Komplettbearbeitung mit definierter Schneide (Bohren, Fräsen, Drehen) benötigen eine Werkzeugspindel, die stehende und drehende Werkzeuge aufnehmen kann. Drehende Werkzeuge werden zum Fräsen und Bohren benötigt und sind dabei zum Beispiel Bohrer oder Fräser. Stehende Werkzeuge werden zum Drehen benötigt und sind zum Beispiel ein Drehmeißel mit einer Wendeschneidplatte. Bei der Bohr- und Fräsbearbeitung muss das in der Regel mehrschneidige Werkzeug (Bohrer, Fräser) die rotierende Hauptbewegung (Schnittbewegung) zum spanenden Abtragen des Materials ausführen. Das in der Werkzeugspindel eingespannte Werkzeug dreht sich dabei mit entsprechender Drehzahl und wird entlang der zu bearbeitenden Fläche geführt. Das Werkstück (Werkstücktisch) führt in der Regel nur die Vorschub- und die Positionsbewegung durch. Das drehende bzw. rotierende Werkzeug erzeugt die für das spanende Abtragen des Materials notwendige Schnittbewegung. Im Gegensatz dazu wird beim Drehen die rotierende Hauptbewegung (Schnittbewegung) zum spanenden Abtragen des Materials vom Werkstück (Werkstücktisch, Werkstückspannmittel) ausgeführt. Das in der Regel einschneidige Werkzeug (Drehmeißel mit Wendeschneidplatte) steht still und wird entlang der zu bearbeitenden Fläche geführt. Das Werkzeug führt in der Regel nur die Vorschub- und die Positionierbewegung. Das rotierende Werkzeug erzeugt die für das spanende Abtragen des Materials notwendige Schnittbewegung.

Bei Fräsen und Bohren rotiert das Werkzeug mit sehr hoher Drehzahl. Drehzahlen von 20.000 U/min sind durchaus üblich. Aus diesem Grund benötigt die Werkzeugspindel eine sehr präzise und hochbelastbare Lagerung, um die hauptsächlich in radialer Richtung auftretende Zerspanungskräfte aufnehmen zu können. Die Drehzahl wird in der Werkzeugspindel nach dem Stand der Technik über einen so genannten Drehgeber erfasst und der Maschinensteuerung weitergeleitet. Der Drehgeber muss die Ist-Drehzahl ausreichend genau und präzise erfassen. Dem gegenüber ist bei einem drehenden Werkzeug die präzise und genaue Erfassung der Drehwinkellage des Werkzeuges in Bezug auf die Spindelachse in der Regel nicht notwendig. Bei einem stehenden Werkzeug zum Drehen ist aber gerade die Drehwinkellage des Werkzeuges bzw. der Werkzeugschneide in Bezug auf die Spindelachse von hoher Bedeutung. Für den Zerspanungsvorgang beim Drehen muss die Werkzeugsschneide je nach Zerspanungsaufgabe (Plandrehen, Längsdrehen, Abstechen usw.) in einen speziellen Drehwinkel zum Werkstück eingestellt werden. Außerdem muss das Drehwerkzeug sehr genau und sicher in dieser Winkelposition gehalten werden. Beim Drehen können sehr große Zerspanungskräfte auftreten. Diese Zerspanungskräfte müssen sicher von der Werkzeugspindel aufgenommen werden. Eine Werkzeugaufnahme für Drehwerkzeuge muss somit zwei Kriterien erfüllen: Zum Ersten muss eine sehr genaue Einstellung der Drehwinkellage möglich sein, zum Zweiten müssen die Zerspanungskräfte sicher aufgenommen werden.

Eine gattungsgemäße zweigeteilte Werkzeugspindel ist aus der EP 1 902 800 A1 und aus der EP 0 755 750 A1 bekannt. Diese Werkzeugspindeln sind aber nur für die Aufnahme von drehenden Werkzeugen ausgeführt. Stehende Werkzeuge können aufgrund der fehlenden mechanischen Blockiereinrichtung nicht sinnvoll aufgenommen werden. Außerdem ist durch die radiale Nachgiebigkeit der Verbindungskupplung (z. B. durch ein Verzahnungsspiel hervorgerufen) zwischen Spindelwelle und Motorwelle eine winkelgenaue Einstellung der Spindelwelle nicht möglich, da der Drehgeber bei diesen Werkzeugspindeln immer an der Motorwelle angeordnet ist.

In der DE 698 02 869 T2(EP-0 887 134) ist eine einteilige Werkzeugspindel für drehende und stehende Werkzeuge beschrieben. Die winkelgenaue Arretierung des stehenden Werkzeuges erfolgt dabei über eine hydraulisch betätigte und axial verschiebliche, stirnseitige Verzahnung, eine so genannte Hirthkupplung, mit der eine drehmomentsteife und winkelgenaue Fixierung des Drehwerkzeuges realisiert wird. Eine so genannte Hirthkupplung besitzt eine axial wirksame, stirnseitige Verzahnung mit einer selbstzentrierenden Wirkung.

Zwar werden die bei der Bearbeitung zwangsläufig auftretenden axialen Kräfte (Bearbeitungskräfte) durch die Spindellagerung aufgenommen, für welche die Spindellagerung der Werkzeugspindel ausgelegt, dimensioniert und in axialer Richtung auch vorgespannt ist. Die Spindellagerung ist jedoch nicht ausgelegt für die gesamte Aufnahme der axialen Kräfte, die beim Einkuppeln der Hirthkupplung entstehen. Dies wäre auch sehr ungünstig, denn die sehr genaue und präzise Spindellagerung ist nur sehr begrenzt für die Aufnahme von axialen Kräften ausgelegt.

Bei der Werkzeugspindel nach der DE 698 02 869 T2 wird die axiale Andrückkraft durch eine Gegenkraft, die zusätzlich auf die Spindelwelle aufgebracht wird, kompensiert. Dadurch erfolgt beim Einrücken der Hirth-Kupplung kein Kraftfluss der axialen Feststellkraft über die Spindellagerung ins Gehäuse.

Weiterhin ist in der EP 1 409 197 B1 eine einteilige Werkzeugspindel für drehende und stehende Werkzeuge beschrieben, die im Prinzip in gleicher Weise funktioniert wie die in der DE 698 02 869 T2 offenbarte Werkzeugspindel, nämlich mit einer axial verschieblichen Hirth-Kupplung. Der Unterschied zur DE 698 02 859 T2 besteht darin, dass bei der EP 1 409 197 B1 beim Kupplungsvorgang eine Gegenkraft zur Andrückkraft der Kupplung aufgebracht wird, um die Lagervorspannung der Spindellagerung erhalten zu können. Dazu wird beim Einkuppelvorgang über einen hydraulisch betätigten Einrückzylinder das am Gehäuse angebrachten Kupplungselement mit dem an der Spindelwelle angebrachten Kupplungselement verbunden. Beim Einkupplungsvorgang wird die Spindelwelle aufgrund der hohen Andrückkraft leicht nach vorne gedrückt, mit der Folge, dass die Vorspannung der Lagerung in axialer Richtung größtenteils aufgehoben wird. Die Andrückfeder, die im "normalen" Betriebszustand (Kupplung außer Eingriff) die Vorspannung der Lager in axialer Richtung bewerkstelligt, kann die Feststellkraft zum Einkuppeln nicht kompensieren. Aus diesem Grund muss zur Unterstützung über einen hydraulisch betätigten Andrückkolben eine zusätzliche axiale Vorspannkraft auf die Lager aufgebracht werden, d.h. durch diesen Andrückkolben wird die Spindelwelle über die Spindellager wieder in die ursprüngliche axiale Position zurückgedrückt und die ursprüngliche Lagervorspannung wird wieder hergestellt.

Der Nachteil der Ausführungen gemäß der DE 698 02 869 T2 und der EP 1 409 197 B1 ist der, dass die funktionsbedingt vorhandene axiale Feststellkraft in irgendeiner Art und Weise entweder durch eine Gegenkraft oder durch eine vergrößerte Spindellagerung kompensiert werden muss. Dies bedeutet auf jeden Fall eine zusätzliche konstruktive Maßnahme.

Der Vorteil der Feststelleinrichtungen gemäß der DE 698 02 869 T2 und der EP 1 409 197 B1 ist aber wiederum der, dass über die axial angeordnete Stirnverzahnung (Hirth-Kupplung) in relativ einfacher Weise eine winkelgenaue Einstellung der Spindelwelle möglich ist. Es muss aber dabei noch erwähnt werden, dass die einstellbare Winkellage natürlich von der Teilung der Verzahnung abhängig ist, z.B. kann die Winkellage nur in 2° Schritten eingestellt werden, dies hat sich in der Praxis als nachteilig erwiesen.

In den beiden oben offenbaren Lösungen muss erheblicher technischer Aufwand betrieben werden, um die Spindellagerung vor axialer Kraft zu schützen bzw. diese auszugleichen (entgegenzuwirken). Bei der DE 698 02 869 T2 wird die Lagerung vor der axialen Kraft geschützt (Gegenkraft direkt auf die Spindelwelle), bei der EP 1 409 197 B1 wird eine Gegenkraft aufgebracht (Gegenkraft direkt auf die Lager).

Ausgehend von diesem Stand der Technik liegt der vorliegenden Erfindung die Aufgabe zu Grunde, eine Werkzeugspindel für stehende und drehende Werkzeuge zu schaffen, bei der das Werkzeug sicher und stufenlos winkelgenau fixiert werden kann, ohne dass dabei durch die Feststelleinrichtung zum Fixieren der Werkzeugspindel zusätzliche axiale Kräfte auf die Spindellagerung direkt oder indirekt wirken.

Die Lösung dieser Aufgabe erfolgt bei einer geteilten Werkzeugspindel für insbesondere eine kombinierte Fräs-/Drehmaschine, mit einem stehenden und sich drehenden Werkzeug, wobei das Werkzeug in einer in einem Spindelgehäuse gelagerten Spindelwelle aufgenommen ist und die Spindelwelle über eine Zahnnabe mit einem an einer Motorwelle angeordneten Zahnkranzelement verbindbar ist, dadurch,
- dass die Spindelwelle von einer in radialer Richtung auf die Spindelwelle wirkenden Klemmbuchse beaufschlagbar ist,
- dass auf der Spindelwelle ein Drehgeber angeordnet ist, und
- dass der Drehgeber ein auf der Spindelwelle angeordnetes Messzahnrad aufweist, das mit einem an dem Spindelgehäuse angeordneten Sensor zusammenwirkt.

Durch die Kombination der radial wirkenden Klemmbuchse mit einem Drehgeber auf der Spindelwelle wird in einfacher Weise eine sichere und winkelgenaue Klemmung realisiert.

Beim Klemmen durch die radial wirkende Klemmbuchse entstehen keine axialen Kraftkomponenten, so dass die Spindellager beim Klemmen nicht belastet werden. Der Drehgeber kann die Winkellage der Spindel hochgenau erfassen. Somit kann über die Antriebsregelung des Spindelmotors die Spindelwelle winkelgenau und stufenlos unter Zuhilfenahme des Drehgebers positioniert werden.

Um eine stufenlose Winkeleinstellung zu ermöglichen, weist der Drehgeber ein auf der Spindelwelle angeordnetes Messzahnrad auf, das mit einem an dem Spindelgehäuse angeordneten Sensor zusammenwirkt.

Das axial wirkende Fixierelement mit Hirthverzahung nach dem Stand der Technik wird erfindungsgemäß durch ein radial wirkendes Fixierelement mit Drehgeber ersetzt. Die Wirkung ist die gleiche, nämlich eine sichere und genaue Fixierung der Spindelwelle, aber mit dem Vorteil, dass die Spindellagerung beim Aktivieren des Fixierelementes in axialer Richtung nicht belastet wird und somit keine Kompensationen notwendig sind und dass eine stufenlose Winkeleinstellung möglich wird.

Aus der JP 60-228 044 A ist zwar eine Werkzeugspindel bekannt, bei der die Spindelwelle von einer in radialer Richtung wirkenden Klemmbuchse beaufschlagt ist, diese ist aber nicht über eine Zahnnabe mit einem an einer Motorwelle angeordneten Zahnkranzelement verbunden. Auch ein Drehgeber ist nicht vorhanden.

Weiterhin ist aus der DE 198 52 049 A1 eine Getriebespindel mit Schwenkeinheit für die Fräs- und Drehbearbeitung bekannt, bei der eine radial wirkende Klemmbuchse realisiert ist. Diese Klemmbuche hat aber nur die Aufgabe, das schwenkbare Spindelgehäuse mit dem festen Gehäuse zu verklemmen. Auch wenn die Klemmung aktiviert ist, lässt sich die Spindelwelle für die Fräsbearbeitung weiterhin drehen. Die Spindelwelle kann um ihre Drehachse einzig und allein über die axial wirkende Hirthverzahnung mit dem Spindelgehäuse axial geklemmt werden, während erfindungsgemäß die Spindelwelle radial geklemmt wird. Darüber hinaus betrifft die DE 198 52 049 auch nicht um eine geteilte bzw. zweigeteilte Werkzeugspindel.

Die Unteransprüche beinhalten vorteilhafte Weiterbildungen und Ausgestaltungen der Erfindung.

Gemäß einer vorteilhaften Weiterbildung ist die Klemmbuchse hydraulisch betätigbar. Diese Klemmbuchsen lassen sich hochflexibel auf unterschiedlichste Bauteile anpassen, schließen und öffnen schnell und ermöglichen aufgrund der hydraulischen Betätigung extrem hohen Haltekräfte, so dass eine sichere Fixierung der Spindelwelle an der gewünschten Position gewährleistet ist.

Besonders einfach lässt sich die Erfindung realisieren, wenn die Klemmbuchse in dem Spindelgehäuse gelagert ist, welches auch die Spindelwelle lagert.

Die Klemmbuchse weist vorteilhafterweise eine elastisch verformbare, zylindrische Wand auf, mit deren Hilfe eine Klemmbuchsen-Aufnahme gegen die Spindelwelle andrückbar ist. So können hohe Haltekräfte auf die Spindelwelle ausgeübt und eine Beaufschlagung mit Axialkräften ausgeschlossen werden.

Die Zahnnabe und das Zahnkranzelement sind vorteilhafterweise jeweils mit einer Evolventenverzahnung, insbes einer Keilverzahnung versehen, die eine gute Übertragung des Drehmomentes zwischen der Spindelwelle und der Motorwelle gewährleistet.

Auf der Motorwelle kann nach einer bevorzugten Weiterbildung ein weiterer Drehgeber angeordnet sein, der vorteilhafterweise ein auf der Motorwelle angeordnetes Messzahnrad aufweist, das mit einem an einem die Motorwelle lagernden Lagerschild angeordneten Sensor zusammenwirkt.

Weitere Einzelheiten, Merkmale und Vorteile der Erfindung ergeben sich aus der nachfolgenden Beschreibung und den Figuren. Es zeigen:
- Figur 1:: eine Seitenansicht im Schnitt einer erfindungsgemäßen Werkzeugspindel, und
- Figur 2:: eine weitere Seitenansicht im Schnitt der erfindungsgemäße Werkzeugspindel.

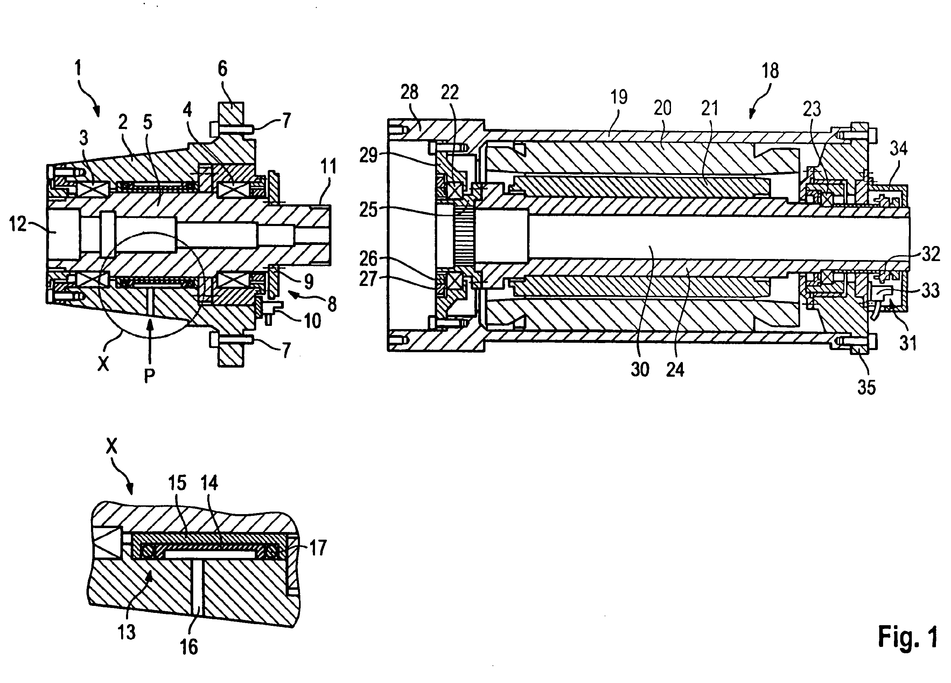

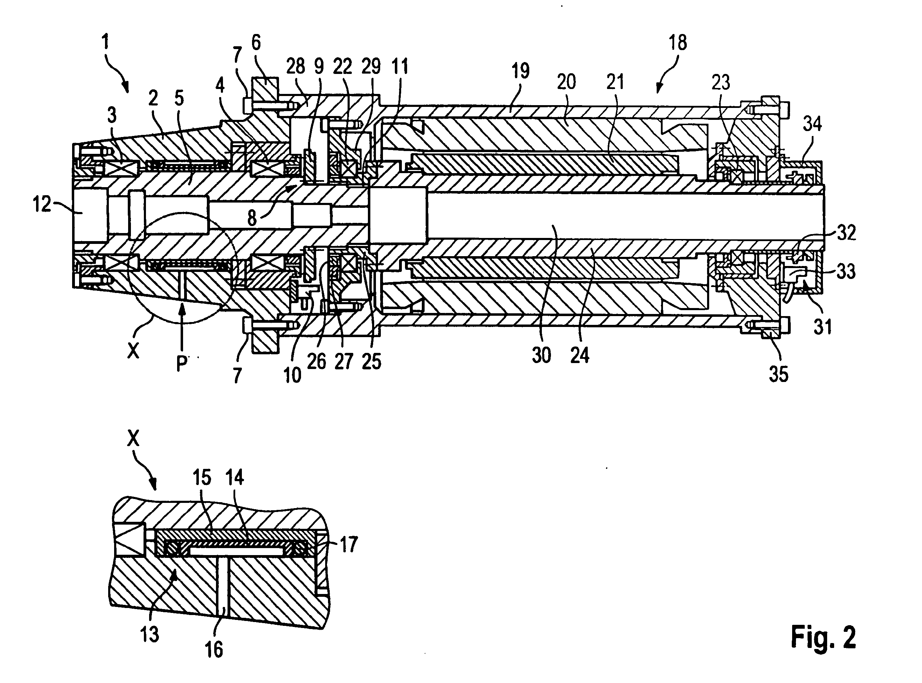

In den Figuren 1 und 2 ist eine erfindungsgemäße Werkzeugspindel im Schnitt dargestellt.

Die erfindungsgemäße Werkzeugspindel weist einen Spindelkopf 1 auf, der eine in einem Spindelgehäuse 2 über Wälzlager 3, 4 gelagerte Spindelwelle 5 umfasst. Das Spindelgehäuse 2 ist mit einem Ringflansch 6 versehen, mit dem es mittels Befestigungsschrauben 7 an einem später noch detailliert beschriebenen Spindelmotor 18 befestigt werden kann.

An der Spindelwelle 5 ist ein Drehgeber 8 befestigt, der ein mit der Spindelwelle 5 verbundenes Messzahnrad 9 aufweist. Das Messzahnrad 9 wirkt mit einem an dem Spindelgehäuse 2 festgelegten Sensor (Tastkopf) 10 zusammen.

Die Spindelwelle 5 ist an ihrem dem Spindelmotor 18 zugewandten Ende mit einer Zahnnabe 11 versehen.

Weiterhin ist in der Spindelwelle 5 eine Durchgangsbohrung 12 für die Aufnahme eines nicht gezeigten Werkzeugspanners vorgesehen.

In dem Spindelgehäuse 2 ist eine sich radial und axial erstreckende, in Richtung auf die Spindelwelle 5 offene Ausnehmung vorgesehen. In dieser Ausnehmung ist eine hydraulische Klemmbuchse 13 angeordnet (vgl. Detail "X" in Figur 1).

Die Klemmbuchse 13 weist eine elastisch verformbare zylindrische Wand 14 auf, die an einer Klemmbuchsen-Aufnahme 15 anliegt. In dem Spindelgehäuse 2 ist weiterhin eine Bohrung 16 für den Anschluss einer Hydraulikquelle P vorgesehen. Zwischen der elastisch verformbaren zylindrischen Wand 14 und der Klemmbuchsen-Aufnahme 15 ist oben und unten jeweils eine Dichtung 17 vorgesehen, welche beispielsweise als O-Ring ausgebildet sein kann.

Durch eine Druckbeaufschlagung der elastisch verformbaren zylindrischen Wand 14 über die Bohrung 16 mit Hydraulikflüssigkeit drückt die Wand 14 die Klemmbuchsen-Aufnahme 15 nach innen und belastet somit die Spindelwelle 5 in radialer Richtung, so dass die Spindelwelle 5 von der Klemmbuchse 13 bzw. deren Klemmbuchsen-Aufnahme 15 festgehalten wird.

Die Spindelwelle 5 ist von dem Spindelmotor 18 antreibbar. Dieser Spindelmotor 18 weist eine Motorgehäuse 19 mit einem Stator 20 auf, in dem ein Rotor 21 gelagert ist. In dem Motorgehäuse 19 sind weiterhin Wälzlager 22, 23 angeordnet, welche eine Motorwelle 24 lagern.

Die Motorwelle 24 ist an ihrem der Spindelwelle 5 zugewandten Ende mit einem Zahnkranzelement 25 versehen, welche mit der Zahnnabe 11 an der Spindelwelle 5 in Eingriff bringbar ist.

Die Zahnnabe 11 bzw. das Zahnkranzelement 25 kann mit einer Evolventenverzahnung, insbesondere mit einer Keilverzahnung, versehen sein. Die Wellen-Nabenverbindung zwischen Spindelwelle 5 und Motorwelle 19 kann aber auch mit anderen alternativen Verbindungsarten realisiert werden. Zum Beispiel mit einer Stiftkupplung, mit einer Kupplung mit Polygonprofil, mit einer Klauenkupplung usw.

Das Wälzlager 22 ist von Gewindeelementen 26, 27 in einem dem Spindelgehäuse 2 zugewandten Endbereich 28 des Motorgehäuses 19 an einer Lageraufnahme 29, die wiederum in dem Motorgehäuse 19 befestigt ist, gehalten.

Der Endbereich 28 weist auch Aufnahmen für die Befestigungsschrauben 7 auf, mit denen der Ringflansch 6 des Spindelgehäuses 2 an dem Motorgehäuse 19 befestigt werden kann.

Wie die Spindelwelle 5 ist auch die Motorwelle 24 mit einer Durchgangsbohrung 30 für die Aufnahme eines Werkzeugspanners versehen.

An der Motorwelle 19 ist ein Drehgeber 31 befestigt, der ein mit der Motorwelle 24 verbundenes Messzahnrad 32 aufweist. Das Messzahnrad 32 wirkt mit einem an dem Motorgehäuse 19 festgelegten Sensor (Tastkopf) 33 zusammen.

Der Drehgeber 31 ist unter einem Lagerdeckel 34, der an einem Lagerschild 35 befestigt ist, verborgen.

Der Drehgeber 8 auf der Spindelwelle 5 sorgt für eine hochgenaue Messung der Winkellage, während der Drehgeber 31 auf der Motorwelle 24 für die Messung der Drehzahl verantwortlich ist.

Der Drehgeber 31 auf der Motorwelle 24 jedoch kann entfallen, wenn der Drehgeber 8 auf der Spindelwelle 5 nicht nur für die Messung der Drehwinkellage, sondern auf für die Messung der Drehzahl herangezogen wird.

### Bezugszeichenliste:

- 1: Spindelkopf
- 2: Spindelgehäuse
- 3: Wälzlager
- 4: Wälzlager
- 5: Spindelwelle
- 6: Ringflansch
- 7: Befestigungsschrauben
- 8: Drehgeber an der Spindelwelle
- 9: Messzahnrad
- 10: Sensor (Tastkopf)
- 11: Zahnnabe
- 12: Durchgangsbohrung
- 13: hydraulische Klemmbuche
- 14: Wand
- 15: Klemmbuchsen-Aufnahme
- 16: Bohrung
- 17: Dichtung
- 18: Spindelmotor
- 19: Motorgehäuse
- 20: Stator
- 21: Rotor
- 22: Wälzlager
- 23: Wälzlager
- 24: Motorwelle
- 25: Zahnkranzelement
- 26: Gewindeelement
- 27: Gewindeelement
- 28: Endbereich
- 29: Lageraufnahme
- 30: Durchgangsbohrung
- 31: Drehgeber an der Motorwelle
- 32: Messzahnrad
- 33: Sensor (Tastkopf)
- 34: Lagerdeckel
- 35: Lagerschild

## Patentansprüche

1. Geteilte Werkzeugspindel für eine kombinierte Fräs-/ Drehmaschine, mit einem stehenden und sich drehenden Werkzeug, umfassend:
- ein Spindelgehäuse (2), und
- eine zur Aufnahme des Werkzeugs ausgebildete und in dem Spindelgehäuse (2) gelagerte Spindelwelle (5),
- eine Motorwelle (24), und
- ein an der Motorwelle (24) angeordnetes Zahnkranzelement (25),
- wobei die Spindelwelle (5) über eine Zahnnabe (11) mit dem Zahnkranzelement (25) verbindbar ist,
dadurch gekenntzeichnet, dass die Spindelwelle (5) von einer in radialer Richtung auf die
Spindelwelle (5) wirkenden Klemmbuchse (13) beaufschlagbar ist, und
- auf der Spindelwelle (5) ein Drehgeber (8) angeordnet ist.

2. Werkzeugspindel nach Anspruch 1, **dadurch gekennzeichnet, dass** die Klemmbuchse (13) hydraulisch betätigbar ist.

3. Werkzeugspindel nach Anspruch 1 oder 2, **dadurch gekennzeichnet, dass** die Klemmbuchse (13) in dem Spindelgehäuse (2) gelagert ist.

4. Werkzeugspindel nach einem der Ansprüche 1 bis 3, **dadurch gekennzeichnet, dass** die Klemmbuchse (13) eine elastisch verformbare, zylindrische Wand (14) aufweist, mit deren Hilfe eine Klemmbuchsen-Aufnahme (15) gegen die Spindelwelle (5) andrückbar ist.

5. Werkzeugspindel nach einem der vorhergehenden Ansprüche, **dadurch gekennzeichnet, dass** der Drehgeber (8) ein auf der Spindelwelle (5) angeordnetes Messzahnrad (9) aufweist, das mit einem an dem Spindelgehäuse (2) angeordneten Sensor (10) zusammenwirkt.

6. Werkzeugspindel nach einem der Ansprüche 1 bis 5, **dadurch gekennzeichnet, dass** die Zahnnabe (11) und das Zahnkranzelement (25) jeweils mit einer Evolventenverzahnung, insbes, einer Keilverzahnung versehen sind.

7. Werkzeugspindel nach einem der Ansprüche 1 bis 6, **dadurch gekennzeichnet, dass** auf der Motorwelle (24) ein weiterer Drehgeber (31) angeordnet ist.

8. Werkzeugspindel nach Anspruch 7, **dadurch gekennzeichnet, dass** der Drehgeber (31) ein auf der Motorwelle (24) angeordnetes Messzahnrad (32) aufweist, das mit einem an einem die Motorwelle (24) lagernden Lagerschild (35) angeordneten Sensor (33) zusammenwirkt.

## Claims

1. A split tool spindle for a combined milling/turning machine, including a stationary and a rotating tool, comprising:
- a spindle housing (2), and
- a spindle shaft (5) which is configured to receive the tool and is supported in the spindle housing (2),
- a motor shaft (24), and
- a gear rim element (25) arranged on the motor shaft (24),
- the spindle shaft (5) being connectable via a gear hub (11) to the gear rim element (25),
**characterized in that**
- the spindle shaft (5) can be acted upon by a clamping bush (13) acting in radial direction on the spindle shaft (5), and
- a rotary encoder (8) is arranged on the spindle shaft (5).

2. The tool spindle of claim 1, **characterized in that** the clamping bush (13) is hydraulically operable.

3. The tool spindle of claim 1 or 2, **characterized in that** the clamping bush (13) is supported in the spindle housing (2).

4. The tool spindle of any of claims 1 to 3, **characterized in that** the clamping bush (13) comprises an elastically deformable cylindrical wall (14) with the help of which a clamping-bush receiving means (15) can be pressed against the spindle shaft (5).

5. The tool spindle of any of the preceding claims, **characterized in that** the rotary encoder (8) comprises a measuring gear (9) which is arranged on the spindle shaft (5) and cooperates with a sensor (10) arranged on the spindle housing (2).

6. The tool spindle of any of claims 1 to 5, **characterized in that** the gear hub (11) and the gear rim element (25) are each provided with an involute toothing, particularly a spline toothing.

7. The tool spindle of any of claims 1 to 6, **characterized in that** a further rotary encoder (31) is arranged on the motor shaft (24).

8. The tool spindle of claim 7, **characterized in that** the rotary encoder (31) comprises a measuring gear (32) which is arranged on the motor shaft (24) and cooperates with a sensor (33) which is arranged on a bearing shield (35) supporting the motor shaft (24).

## Revendications

1. Broche porte-outils de type scindé, dotée d'outils fixe et rotatif, destinée à une machine combinée de fraisage/tournage et comprenant :
- un carter (2),
- un arbre (5), conçu pour recevoir l'outil et logé dans ledit carter (2) de ladite broche,
- un arbre moteur (24), et
- un élément (25) à couronne dentée, calé sur ledit arbre moteur (24),
- l'arbre (5) de ladite broche pouvant être relié audit élément (25) à couronne dentée par l'intermédiaire d'un moyeu denté (11),
**caractérisée par le fait**
- **que** l'arbre (5) de la broche peut être sollicité par une douille de blocage (13) agissant sur ledit arbre (5) dans la direction radiale, et
- **qu'**un codeur rotatif (8) est implanté sur ledit arbre (5) de ladite broche.

2. Broche porte-outils selon la revendication 1, **caractérisée par le fait que** la douille de blocage (13) peut être actionnée hydrauliquement.

3. Broche porte-outils selon la revendication 1 ou 2, **caractérisée par le fait que** la douille de blocage (13) est montée dans le carter (2) de ladite broche.

4. Broche porte-outils selon l'une des revendications 1 à 3, **caractérisée par le fait que** la douille de blocage (13) présente une paroi cylindrique (14) élastiquement déformable, à l'aide de laquelle un logement (15) de ladite douille peut être plaqué contre l'arbre (5) de ladite broche.

5. Broche porte-outils selon l'une des revendications précédentes, **caractérisée par le fait que** le codeur rotatif (8) comporte une roue dentée de mesure (9), calée sur l'arbre (5) de ladite broche et coopérant avec un capteur (10) implanté sur le carter (2) de ladite broche.

6. Broche porte-outils selon l'une des revendications 1 à 5, **caractérisée par le fait que** le moyeu denté (11) et l'élément (25) à couronne dentée sont respectivement pourvus d'une denture en développante, notamment d'une denture cannelée.

7. Broche porte-outils selon l'une des revendications 1 à 6, **caractérisée par le fait qu'**un codeur rotatif supplémentaire (31) est calé sur l'arbre moteur (24).

8. Broche porte-outils selon la revendication 7, **caractérisée par le fait que** le codeur rotatif (31) présente une roue dentée de mesure (32) calée sur l'arbre moteur (24), et coopérant avec un capteur (33) implanté sur un bouclier de palier (35) dévolu au montage dudit arbre moteur (24).
